# EUROPEAN PATENT APPLICATION

(11) **EP 1 013 679 A1**
(43) Date of publication of application: **28.06.2000**
(21) Application number: 99310596.4
(22) Date of filing: 24.12.1999
(51) Int. Cl.: C08F 210/10, C08F 212/08, C08F 4/14

(54) **Catalytic system for copolymerization of isobutylene/styrene and polymerization process using the same**

(30) Priority: 25.12.1998 JP 36951698
(71) Applicant: Bridgestone Corporation, Tokyo (JP)
(72) Inventor: Omura, Tetsuya, Kodaira-shi, Tokyo (JP)
(74) Representative: Whalley, Kevin

(57) **Abstract**

There are disclosed a catalytic system for copolymerization of isobutylene and styrene, comprising a dialkylaluminum halide and a co-catalyst, the dialkylaluminum halide being represented by the general formula R¹ R² Al X ( R¹ and R² are each an alkyl group having 1 to 10 carbon atoms or an aralkyl group having 7 to 10 carbon atoms, and X is a halogen atom ), and further a halogenated metal as the case may be; and a process for producing an isobutylene/styrene copolymer which comprises a step of copolymerizing isobutylene and styrene at a temperature in the range of 10°C to 50°C in the presence of the above catalytic system. The catalytic system is capable of industrially producing, in high yield, an isobutylene/styrene copolymer having a relatively low molecular weight which is useful as a resin component for heat-fusible resin compositions, hot-melt adhesives, pressure-sensitive adhesives and the like and as a softening agent for a rubber composition.

## Description

### BACKGROUND OF THE INVENTION

### 1. Field of the Invention

The present invention relates to a catalytic system for copolymerization of isobutylene and styrene, and to a process for producing an isobutylene/styrene copolymer using the catalytic system. More particularly, the present invention pertains to a catalytic system capable of producing, at a high yield, an isobutylene/styrene copolymer having a relatively low molecular weight by means of high-temperature cationic polymerization, and a process for producing an isobutylene/styrene copolymer having a relatively low molecular weight in high efficiency in an industrial scale by the use of the aforesaid catalytic system.

### 2. Description of the Related Arts.

It is known that isobutylene/styrene copolymers having a relatively low molecular weight ranging from approximately 1000 to 10000 are used as a resin component for heat-fusible resin compositions employed as a covering material for a substrate such as cloth, paper and cardboard, hot-melt adhesives, pressure-sensitive adhesives and the like. In addition, attention has recently been paid to the purpose of use of the above-mentioned copolymer as a softening agent for rubber by the assignee of Japanese Patent Laid-Open No.315171/Heisei-11.

For the purpose of facilitating rubber processing, a softening agent has heretofore been used as a chemical which plays a role for accelerating the relaxation phenomenon of a polymer, and at the same time, for aiding in dispersing other compounding agents into rubber, by causing itself to function as an intermolecular lubricant for rubber.

The aforesaid softening agent can be classified roughly into those of mineral oil base, vegetable oil base and synthetic oil base. A typical softening agent of mineral oil base is a softening agent of petroleum oil base, which is marketed as a wide range of product series including paraffin base oils having low affinity for rubber and highly aromatic base oils having high affinity for rubber, and which is consumed in a large amount not only as a so-called process oil, but also as an extending oil for oil-extended rubber such as styrene/butadiene copolymer rubber (SBR).

In spite of its being excellent in compatibility, resistance against bleeding and processability, the aromatic base oils involve the problem that in order to improve high hysteresis loss characteristics of a rubber composition, a relatively large amount thereof needs to be blended in said composition, and consequently gives rise to inevitable deterioration in the fracture characteristics of the rubber composition.

In order to solve the above-mentioned problem, an investigation has been made on the use of polyisobutylene in liquid form, butyl rubber in liquid form or the like, which however, brings about the problem that poor compatibility thereof with a diene base rubber causes bleeding on the surface of the product after molding, and in particular, in the case where said product is combined with an other member into a final finished product, the adhesivity therebetween is unfavorably deteriorated.

An attempt has been made to employ a diene based polymer having a low molecular weight and favorable compatibility with a diene based rubber. Nevertheless there arise the problems that said polymer is not only expensive but also gives rise to cross-linking reaction with sulfur.

Under such circumstances, attention has recently been paid by the assignee to isobutylene/styrene copolymers having a relatively low molecular weight as a softening agent which improves both the fracture characteristics and high hysteresis loss characteristics of the rubber composition, has favorable compatibility with a rubber component as a matrix, and is available at a low cost. It is known that cationic polymerization is effective as a process for producing isobutylene / styrene copolymers having a relatively low molecular weight ( refer to "Kohbunshi Kagaku" vol.18, No.195, pp 389 to 395, 1961).

In the case of producing a polymer having a relatively low molecular weight by means of radical polymerization, there is generally used a large amount of a radical polymerization initiator, which however gives rise to the problem that it is difficult to control the molecular weight of the objective polymer. On the other hand, cationic polymerization is a process in which polymerization is effected by the use of an electophilic reagent such as a protonic acid or a Lewis acid as a polymerization initiator. In the cationic polymerization, by adding an acid to a monomer, a carbon cation is formed (initiation reaction), and then by adding another monomer to said carbon cation, there is formed a propagating cation which has a molecular weight higher than before (propagation reaction). The resultant propagating cation, which is not so stable, is susceptible to be deactivated by a bonding with a counter ion or an other base (termination reaction), or by an elimination reaction of β-hydrogen at the terminal of the propagating cation by a counter ion or a monomer (chain transfer reaction), whereby a high molecular weight polymer is less prone to be formed unless the polymerization is effected under a special reaction condition. It is therefore made possible to control the reaction in such a cationic polymerization by properly selecting the kinds of counter ions.

However, the above-mentioned cationic polymerization suffers from the disadvantage of an inevitably high production cost, since it is necessary to carry out the reaction usually at a low temperature in the range of -100°C to -30°C.

There is disclosed, as an example of high-temperature cationic polymerization, a process for producing isobutylene/ styrene copolymer having a high styrene moiety content of not less than 50% by weight at a temperature in the range of 10°C to 50°C in the presence of an alkylaluminum dihalide { refer to Japanese Patent Publication No.19707/(Showa 49)}. There are found, however, very few reports on such high-temperature polymerization. Such being the case, it has been an important subject or serious problem, to industrially and efficiently produce an isobutylene/styrene copolymer having a relatively low molecular weight by high-temperature polymerization.

### SUMMARY OF THE INVENTION

Under such circumstance, it is a general problem-solution approach of the present invention to provide a catalytic system for copolymerization capable of producing at a high yield, an isobutylene/styrene copolymer having a relatively low molecular weight by means of high-temperature cationic polymerization.

It is another problem-solution approach of the present invention to provide a process for producing an isobutylene/ styrene copolymer having a relatively low molecular weight in high efficiency in an industrial scale by the use of said catalytic system.

Other problem-solution approaches of the present invention will be obvious from the text of the specification which will be disclosed hereinafter.

In such circumstances as described before, intensive extensive research and investigation were accumulated by the present inventor in order to achieve the foregoing objects. As a result, it has been found that a catalytic system for copolymerization of isobutylene and styrene which comprises a dialkylaluminum halide and a co-catalyst, and as the case may be, further comprising a halogenated metal, can meet the general problem-solution approach of the present invention, and that an isobutylene/styrene copolymer having a relatively low molecular weight can be produced in high efficiency in an industrial scale by copolymerizing isobutylene and styrene at a temperature in the range of 10°C to 50°C in the presence of said catalytic system. The present invention has been accomplished by the above-mentioned findings and information.

Specifically, the present invention provides a catalytic system for copolymerization of isobutylene and styrene which comprises a dialkylaluminum halide and a co-catalyst, and as the case may be, a halogenated metal, wherein said dialkylaluminum halide is represented by the general formula (I )

R¹ R² Al X (I)

wherein R¹ and R² are each an alkyl group having 1 to 10 carbon atoms or an aralkyl group having 7 to 10 carbon atoms, and may be the same as or different from each other, and X is a halogen atom.

The present invention also provides a process for producing an isobutylene/styrene copolymer which comprises a step of copolymerizing isobutylene and styrene at a temperature in the range of 10°C to 50°C in the presence of the catalytic system.

### DESCRIPTION OF THE PREFERRED EMBODIMENTS

The catalytic system for copolymerization of isobutylene and styrene according to the present invention comprises, as the principal catalytic component, a dialkylaluminum halide represented by the general formula (I ).

R¹ R² Al X (I)

In this formula (I ), R¹ and R² are each an alkyl group having 1 to 10 carbon atoms or an aralkyl group having 7 to 10 carbon atoms, are each particularly preferably an alkyl group having 1 to 4 carbon atoms, and may be the same as or different from each other; the alkyl group having 1 to 10 carbon atoms may be straight chain, branched or cyclic, and is exemplified by a methyl group, ethyl group, n-propyl group, isopropyl group, n-butyl group, isobutyl group, sec-butyl group, tert-butyl group, pentyl groups of different types, hexyl groups of different types, octyl groups of different types, decyl groups of different types, cyclopentyl group and cyclohexyl group; the aralkyl group having 7 to 10 carbon atoms is exemplified by a benzyl group and phenethyl group; and X is a halogen atom and is exemplified by a fluorine atom, chlorine atom, bromine atom and iodine atom, of which a chlorine atom is particularly preferable.

Preferable examples of the dialkylaluminum halide which is represented by the general formula (I ) include dimethylaluminum chloride, diethylaluminum chloride, dipropylaluminum chloride, dibutylaluminum chloride, methylethylaluminum chloride, methylpropylaluminum chloride, methylbutylaluminum chloride, ethylpropylaluminum chloride, ethylbutylaluminum chloride and propylbutylaluminum chloride. The above-mentioned propyl group includes n-propyl group and isopropyl group; and butyl group includes n-butyl group, isobutyl group, sec-butyl group and tert-butyl group.

In addition, the catalytic system for copolymerization of isobutylene and styrene according to the present invention may comprise one or more dialkylaluminum halides.

There are used water, an alcohol, an alkyl halide, a halogen acid and the like as a co-catalyst in the catalytic system according to the present invention. The alcohol is preferably a lower alcohol having 1 to 4 carbon atoms such as methyl alcohol, ethyl alcohol, n-propyl alcohol, isopropyl alcohol, n-butyl alcohol, isobutyl alcohol, sec-butyl alcohol and tert-butyl alcohol. The alkyl halide is preferably a chloride of a lower alkane such as propyl chloride or butyl chloride. The halogen acid is preferably hydrogen chloride or hydrogen bromide.

The foregoing co-catalyst may be used alone or in combination with at least one other.

The co-catalyst according to the present invention is used in an amount of preferably 0.01 to 30 mols, more preferably 0.05 to 10 mols per one mol of the dialkylaluminum halide as described hereinbefore.

The above-mentioned catalytic system may be incorporated, as desired, with a halogenated metal in addition to the dialkylaluminum halide and co-catalyst as mentioned hereinbefore. Examples of the halogenated metal include any of a fluoride, chloride, bromide and iodide of a metal such as titanium, zirconium, tin and zinc. Of these are particularly preferable titanium tetrachloride and tin tetrachloride. Said halogenated metal may be used alone or in combination with at least one other.

In the present invention, the halogenated metal is used in an amount of preferably at most one mol, more preferably 0.005 to 0.1 mol per one mol of the dialkylaluminum halide as described hereinbefore.

The embodiments of the catalytic system according to the present invention include (1) a catalytic sytem comprising a dialkylaluminum halide and a co-catalyst, and (2) a catalytic system comprising a dialkylaluminum halide, a co-catalyst, and further a halogenated metal. In regard to catalytic activity, the catalytic system (2) has usually higher activity than the catalytic system (1).

The catalytic system according to the present invention is prepared by mixing the foregoing dialkylaluminum halide and co-catalyst, and halogenated metal to be used when desired, each at a prescribed proportion respectively, usually in a proper polymerization solvent. In this case, the order of adding each of the components is not specifically limited, thus allowing any optional order of adding.

The aforesaid polymerization solvent may be properly selected for use from the solvents that are generally used for cationic polymerization. Examples of the aforesaid solvent include hydrocarbon based solvents that are exemplified by aliphatic hydrocarbons such as pentane, hexane and cyclohexane; aromatic hydrocarbons such as benzene, toluene and xylene; halogenated hydrocarbons such as chloromethane; chloroethane; methylene chloride; 1, 1-dichloroethane; chloroform; and 1, 2-dichloroethane. Of these, aromatic hydrocarbons are preferable, of which toluene is particularly preferable.

The aforesaid polymerization solvent may be used alone or in combination with at least one other by mixing. Moreover, solvents other than these exemplified herein may be used together in a small amount.

In producing the isobutylene/styrene copolymer according to the present invention, isobutylene and styrene are subjected to cationic polymerization in a polymerization solvent containing the catalytic system prepared in any of the above-mentioned manners. The amount of the catalytic system to be used in the cationic polymerization based on the amount of the monomers depends upon a variety of conditions, and thus can not be unequivocally determined. In general, however, said amount is selected so that the amount of dialkylaluminum halide comes to be in the range of from 0.015 to 0.12 mmol, preferably from 0.03 to 0.08 mmol per one gram of the sum of the amounts of the isobutylene and styrene. The ratio of the polymerization solvent to the monomers is in the range of preferably from 20 to 1000 parts by weight, particularly preferably from 50 to 500 parts by weight per 100 parts by weight of the total amount of the isobutylene and styrene taking into consideration such factors as the dispersion of the catalytic components, the removal of polymerization heat, the viscosity of the reaction liquid.

The polymerization temperature is selected in the range of preferably from 10°C to 50°C, more preferably from 10°C to 30°C. It is possible to proceed with the cationic polymerization under self-generating pressure or under applied pressure according to the demand. The polymerization pressure is properly selected in accordance with such factors as the monomers to be used, the type of catalytic system and polymerization temperature. It is also possible to carry out the cationic polymerization at a higher pressure as desired, by introducing an inert gas such as nitrogen, argon and helium into the reaction system.

The ratio by weight of isobutylene to styrene is not specifically limited, but may be properly selected according to the desirable properties and application of the objective copolymer. In general, the ratio by weight of isobutylene to styrene is in the range of 10 : 90 to 90 : 10, preferably 40 : 60 to 80 : 20. The polymerization method is not specifically limited, but may be properly adopted from batchwise system, semi-batchwise system and continuous system.

After the completion of the polymerization, the catalytic components are deactivated by adding methanol or the like to the reaction liquid, and thereafter the resultant isobutylene/ styrene copolymer is isolated according to a conventional method. There may be adopted, as an isolating method, for instance, a process comprising the steps of adding water to the reaction liquid after the completion of the polymerization ; filtering the liquid to remove solid contents when needed; thereafter separating the resultant filtrate into a water layer and an organic layer; distilling away the solvent from the organic layer; and drying the residue in the organic layer so as to obtain the objective copolymer.

By the procedure described before, there is obtained the objective isobutylene/styrene copolymer with a weight-average molecular weight of approximately 2000 to 10000, usually in a yield of at least 70%, wherein said weight-average molecular weight is determined through gel permeation chromatography (GPC) by the use of a refractive index detector (RI) and is expressed in terms of polystyrene.

The isobutylene/styrene copolymer obtained in such a manner is used as a resin component for heat-fusible resin compositions, hot-melt adhesives, pressure-sensitive adhesives and the like, said compositions being employed as a covering material for a substrate such as cloth, paper and cardboard, or a softening agent for rubber composition.

In the case of applying the copolymer to a softening agent for rubber, it is preferable that the copolymer have an isobutylene moiety content of 30 to 90% by weight and a styrene moiety content of 70 to 10% by weight. A styrene moiety content, when less than 10% by weight, brings about deterioration in compatibility with rubber and thus liability to bleeding of the copolymer, whereas said content, when more than 70% by weight, results in unfavorable deterioration in the performance thereof as a softening agent for a rubber composition. In view of the compatibility with rubber and the performance thereof as a softening agent for a rubber composition, it is particularly preferable that the copolymer have an isobutylene moiety content of 40 to 80% by weight and a styrene moiety content of 60 to 20% by weight.

The styrene moiety content can be calculated from the result of proton magnetic resonance spectra as described hereinafter.

In the case of employing the copolymer as a softening agent for a rubber composition, it is preferable that the copolymer have a styrene moiety content more than that of the rubber component in the matrix from the viewpoint of the compatibility with the rubber, and it is advantageous that the difference between the two be at least 15% by weight.

As described hereinbefore, the isobutylene/styrene copolymer which is obtained by the method according to the present invention, is well suited for use as a softening agent for a rubber composition. In the case of using the copolymer, for instance, as a softening agent for a tire tread rubber composiion, the amount thereof to be blended is preferably in the range of 5 to 200 parts by weight based on 100 parts by weight of the rubber component. Said amount, when less than 5 parts by weight based thereon, causes a fear of failure to sufficiently exhibit the effect on improvement in high hysteresis loss characteristics, whereas said amount, when more than 200 parts by weight based thereon, brings about a cause for the deterioration in the fracture strength of the rubber.

It is possible to use said copolymer in combination with an aromatic oil or the like which is customarily used as a softening agent for a rubber composition. Likewise in this case also, the total amount of these softening agents to be blended is preferably at most 200 parts by weight based on the amount of rubber component. In addition, said copolymer is used preferably in an amount of at least 15% by weight based on the total amount of the softening agents.

In a rubber composition, no specific restriction is imposed upon the rubber components to which this isobutylene/ styrene copolymer is applied as a softening agent. Among the aforesaid components, a diene-based rubber is preferable, and is specifically exemplified by natural rubber(NR), synthetic polyisoprene rubber (IR) , polybutadiene (BR) , styrene/butadiene copolymer (SBR) , butyl rubber (IIR) , ethylene/propylene/diene copolymer (EPDM) and acrylonitrile/butadiene copolymer (NBR), of which NR, BR and SBR are particularly preferable.

In summarizing the working effect and advantage of the present invention, it is made possible by the catalytic system of the present invention to produce an isobutylene/styrene copolymer having a relatively low molecular weight in high yield through high-temperature cationic polymerization. Thus, the use of the catalytic system of the present invention enables to produce in high yield, and in an industrially advantageous manner, an isobutylene/styrene copolymer having a relatively low molecular weight which is useful as a resin component for heat-fusible resin compositions, hot-melt adhesives, pressure-sensitive adhesives and the like and as a softening agent for a rubber composition.

In the following, the present invention will be described in more detail with reference to comparative examples and working examples, which however shall never limit the present invention therto.

Measurements were made of water contents in solvents and properties of the resultant copolymers in accordance with the following procedures.

### (1) Water contents in solvents

Water contents in solvents were measured by the use of a coulometric titration system water content measuring apparatus (type CA-06) manufactured by Mitsubishi Chemical Industries Ltd.

### (2) Weight-average molecular weight (Mw) and molecular weight distribution (Mw/Mn ratio) of copolymer

Measurements were made of the weight-average molecular weights (Mw) of the copolymers by means of a gel permeation chromatographic apparatus ( GPC; manufactured by Tosoh Corporation under the trade name "HLC-8020", column; manufactured by Tosoh Corporation under the trade name "GMH-XL" in 2 pieces in series) by the use of a refractive index detector (RI) by expressing in terms of polystyrene using polystyrene with single variance as the standard. Likewise, measurements were made of the number-average molecular weights (Mn) thereof and the molecular weight distribution (Mw/Mn ratio). Hereinafter, the aforesaid method is referred to as GPC-RI method. In addition, the molecular weight at the peak top (abbreviated to TOP M.W.) was measured.

### (3) Styrene moiety content of copolymer

The styrene moiety content was determined by measuring the proton magnetic resonance spectra (¹H-NMR) and calculating the integration ratio. Specifically, by regarding the peak of 0 to 3 ppm as the peak of the proton assigned to C-C bonding which was formed by the reaction between the isobutylene and the vinyl group of the styrene, and at the same time, with regard to the peak of 6 to 7.5 ppm as the peak of the proton assigned to the aromatic ring of styrene, a calculation was made of the molar ratio of styrene moiety to isobutylene moiety, and the styrene moiety content of the copolymer was determined by converting the molar ratio thus obtained into the ratio by weight using the molecular weights of both isobutylene and styrene.

### Example 1

A dried 100mℓ flask purged with nitrogen was charged with 15mℓ of toluene having a moisture content of approximately 35 ppm. To the charged toluene was added, under stirring, a solution of diethylaluminum chloride in n-hexane in a concentration of 0.95 mol/liter so that the amount of the added diethylaluminum chloride in the resultant mixture came to be 0.4 mmol. Then the mixture was stirred at 5°C for 5 minutes so as to obtain a catalytic system.

To the resultant catalytic system was gradually added the mixed solution ( monomer solution ) composed of 4.5g of isobutylene, 5.5g of styrene and 17.5mℓ of water-free toluene over a period of 10 minutes, while controlling the temperature of the reaction system at 10 to 15°C. After completing the addition of the monomer solution, the mixed reactants were further subjected to post-agitation for one hour at room temperature to proceed with copolymerization reaction.

Subsequently, 2mℓ of methanol was added to the reaction liquid to terminate the copolymerization reaction, thereafter 20mℓ of water was added thereto, the resultant organic layer was recovered by separation, and said layer was dried to obtain the objective copolymer. The conditions for copolymerization reaction and the characteristics of the resultant copolymer are given in Table 1.

### Example 2

The procedure in Example 1 was repeated to obtain an isobutylene/styrene copolymer except that the monomer solution at a controlled temperature of 15°C to 20°C was gradually added over a period of 25 minutes, and after completing the addition of the monomer solution, the mixed reactants were further subjected to post-agitation for two hours. The conditions for copolymerization reaction and the characteristics of the resultant copolymer are given in Table 1.

### Example 3

A dried 100mℓ flask purged with nitrogen was charged with 15mℓ of toluene having a water content of approximately 35 ppm. To the charged toluene was added, under stirring, a solution of diethylaluminum chloride in n-hexane in a concentration of 0.95 mol/liter so that the amount of the added diethylaluminum chloride in, the, resultant, mixture came to be 0.4 mmol. Then the mixture was stirred at 5°C for 5 minutes. Thereafter to the resultant mixture was further added a solution of titanium tetrachloride in cyclohexane in a concentration of 0.25 mol/liter so that the amount of the added titanium tetrachloride in the resultant mixture came to be 0.0076 mmol. Then the mixture was stirred at 5°C for 5 minutes so as to obtain a catalytic system.

To the resultant catalytic system was gradually added the mixed solution ( monomer solution ) composed of 4.5g of isobutylene, 5.5g of styrene and 17.5mℓ of moisture-free toluene over a period of 15 minutes, while controlling the reaction system at a temperature in the range of 10°C to 20°C. After completing the addition of the monomer solution, the mixed reactants were further subjected to post-agitation for one hour at room temperature to proceed with copolymerization reaction.

Subsequently, 2mℓ of methanol was added to the reaction liquid to terminate the copolymerization reaction, thereafter 20mℓ of water was added thereto, the resultant organic layer was recovered by separation, and said layer was dried to obtain the objective copolymer. The conditions for copolymerization reaction and the characteristics of the resultant copolymer are given in Table 1.

### Example 4

The procedure in Example 3 was repeated to obtain an isobutylene/styrene copolymer except that the amount of the added titanium tetrachloride in the resultant mixture came to be 0.01 mmol, and that the monomer solution at a controlled temperature of 10 to 15°C was gradually added over a period of 15 minutes. The conditions for copolymerization reaction and the characteristics of the resultant copolymer are given in Table 1.

### Example 5

The procedure in Example 3 was repeated to obtain an isobutylene/styrene copolymer except that the amount of the added titanium tetrachloride in the resultant mixture came to be 0.0124 mmol, and that the monomer solution at a temperature controlled in the range of 20°C to 25°C was gradually added over a period of 12 minutes. The conditions for copolymerization reaction and the characteristics of the resultant copolymer are given in Table 1.

### Example 6

A dried 100mℓ flask purged with nitrogen was charged with 15mℓ of toluene having a moisture content of approximately 35 ppm. To the charged toluene was added under stirring, a solution of titanium tetrachloride in cyclohexane in a concentration of 0.25 mol/liter so that the amount of the added titanium tetrachloride in the resultant mixture came to be 0.025 mmol. Then the resultant mixture was stirred at 5°C for 5 minutes. Thereafter to the resultan t mixture was further added a solution of diethylaluminum chloride in n-hexane in a concentration of 0.95 mol/liter so that the amount of the added diethylaluminum chloride in the resultant mixture came to be 0.4 mmol. Then the mixture was stirred at 5°C for 5 minutes so as to obtain a catalytic system.

To the resultant catalytic system was gradually added the mixed solution ( monomer solution ) composed of 4.5g of isobutylene, 5.5g of styrene and 17.5mℓ of water-free toluene over a period of 22 minutes, while controlling the reaction system at a temperature in the range of 15°C to 20°C. After completing the addition of the monomer solution, the mixed reactants were further subjected to post-agitation for one hour at room temperature to proceed with copolymerization reaction.

Subsequently, 2mℓ of methanol was added to the reaction liquid to terminate the copolymerization reaction, thereafter 20mℓ of water was added thereto, the resultant organic layer was recovered by separation, and said layer was dried to obtain the objective copolymer. The conditions for copolymerization reaction and the characteristics of the resultant copolymer are given in Table 1.

### Example 7

The procedure in Example 6 was repeated to obtain an isobutylene/styrene copolymer except that a solution of titanium tetrachloride in cyclohexane was added so that the amount of the added titanium tetrachloride in the resultant mixture came to be 0.03 mmol, that the monomer solution at a controlled temperature in the range of 10°C to 20°C was gradually added over a period of 10 minutes, and that after the addition of the monomer solution, the mixed reactants were subjected to post-agitation for 1.5 hour. The conditions for copolymerization reaction and the characteristics of the resultant copolymer are given in Table 1.

**Table 1 -1**

| Example Number | | 1 | 2 | 3 | 4 |
|---|---|---|---|---|---|
| REACTION CONDITIONS | | | | | |
| St/IB ratio by weight | | 55/45 | 55/45 | 55/45 | 55/45 |
| Main catalyst | | Et₂AlCl | Et₂AlCl | Et₂AlCl | Et₂AlCl |
| Co-catalyst | | H₂O | H₂O | H₂O | H₂O |
| Amount of main catalyst added (mmol/g•monomer) | | 0.04 | 0.04 | 0.04 | 0.04 |
| Halogenated metal | | - | - | TiCl₄ | TiCl₄ |
| Halogenated metal/Main | | | | | |
| catalyst molar ratio | | - | - | 0.019 | 0.025 |
| Order of adding catalytic components | | H₂O→ Et₂AlCl | H₂O→ Et₂AlCl | H₂O→ Et₂AlCl→ TiCl₄ | H₂O→ Et₂AlCl→ TiCl₄ |
| Polymerization temperature | | 10°C | 15/20°C | 10/20°C | 10°C |
| Dropwise adding time,min | | 10 | 25 | 15 | 15 |
| Post-agitation time,min | | 60 | 120 | 60 | 60 |

| COPOLYMER | | | | | |
|---|---|---|---|---|---|
| St moiety content,wt% | | 52 | 52 | 51 | 53 |
| GPC-RI | TOP M.W. | 5224 | 3872 | 3938 | 3330 |
| Method | Mw | 5990 | 5750 | 4600 | 5310 |
| | Mw/Mn | 1.93 | 1.98 | 1.67 | 2.02 |
| GPC-UV | TOP M.W. | 4744 | 3393 | 3619 | 2887 |
| Method | Mw | 5500 | 5060 | 4220 | 4560 |
| | Mw/Mn | 2.05 | 2.07 | 1.74 | 2.07 |
| Yield, % | | 70 | 76 | 79 | 81 |
| {Remarks} St: styrene, IB: isobutylene Et: ethyl group | | | | | |

**Table 1-2**

| Example Number | | 5 | 6 | 7 |
|---|---|---|---|---|
| REACTION CONDITIONS | | | | |
| St/IB ratio by weight | | 55/45 | 55/45 | 55/45 |
| Main catalyst | | Et₂AlCl | Et₂AlCl | Et₂AlCl |
| Co-catalyst | | H₂O | H₂O | H₂O |
| Amount of main catalyst added (mmol/g•monomer) | | 0.04 | 0.04 | 0.04 |
| Halogenated metal | | TiCl₄ | TiCl₄ | TiCl₄ |
| Halogenated metal/Main | | | | |
| catalyst molar ratio | | 0.031 | 0.063 | 0.075 |
| Order of adding catalytic components | | H₂O→ Et₂AlCl→ TiCl₄ | H₂O→TiCl₄→ Et2AlCl | H₂O→TiCl₄→ Et₂AlCl |
| Polymerization temperature | | 20/25°C | 15/20°C | 10/20°C |
| Dropwise adding time,min | | 12 | 22 | 10 |
| Post-agitation time,min | | 60 | 60 | 90 |

| COPOLYMER | | | | |
|---|---|---|---|---|
| St moiety content,wt% | | 53 | 53 | 54 |
| GPC-RI | TOP M.W. | 3083 | 2441 | 2801 |
| Method | Mw | 4040 | 3020 | 3860 |
| | Mw/Mn | 1.99 | 1.57 | 1.81 |
| GPC-UV | TOP M.W. | 2309 | 2149 | 2312 |
| Method | Mw | 3420 | 2690 | 3520 |
| | Mw/Mn | 2.16 | 1.66 | 1.69 |
| Yield, % | | 98 | 96 | 97 |
| {Remarks} St: styrene, IB: isobutylene Et: ethyl group | | | | |

### Comparative Example 1

The procedure in Example 1 was repeated to obtain an isobutylene/styrene copolymer except that in place of the solution of diethylaluminum chloride in n-hexane, use was made of a solution of ethylaluminum dichloride in n-hexane in a concentration of 0.93 mol/liter so that the amount of the added ethylaluminum dichloride in the resultant mixture came to be 0.4 mmol, and that the monomer solution at a controlled temperature of 10 to 15°C was gradually added over a period of 12 minutes. The conditions for copolymerization reaction and the characteristics of the resultant copolymer are given in Table 2.

### Comparative Example 2

A dried 100mℓ flask purged with nitrogen was charged with 15mℓ of n-hexane having a moisture content of approximately 35 ppm. To the charged n-hexane was added, under stirring, a solution of ethylaluminum dichloride in n-hexane in a concentration of 0.93 mol/liter so that the amount of the added ethylaluminum dichloride in the resultant mixture came to be 0.4 mmol. Then the mixture was stirred at 5°C for 5 minutes so as to obtain catalytic system.

To the resultant catalytic system was gradually added the mixed solution (monomer solution) composed of 4.5g of isobutylene, 5.5g of styrene and 23mℓ of moisture-free n-hexane over a period of 14 minutes, while controlling the reaction system at a temperature in the range of 10°C to 20°C. Thereafter, by carrying out the procedure same as in Example 1, a copolymer was obtained. The conditions for copolymerization reaction and the characteristics of the resultant copolymer are given in Table 2.

### Comparative Example 3

The procedure in Example 1 was repeated to obtain an isobutylene/styrene copolymer except that in place of the solution of diethylaluminum chloride in n-hexane, use was made of a solution of titanium tetrachloride in cyclohexane in a concentration of 0.25 mol/liter so that the amount of the added titanium tetrachloride in the resultant mixture came to be 0.4 mmol, and that the monomer solution at a controlled temperature of 10 to 15°C was gradually added over a period of 15 minutes. The conditions for copolymerization reaction and the characteristics of the resultant copolymer are given in Table 2.

### Comparative Example 4

The procedure in Example 5 was repeated to obtain an isobutylene/styrene copolymer except that in place of the solution of diethylaluminum chloride in n-hexane, use was made of a solution of triethylaluminum in n-hexane in a concentration of 0.93 mol/liter so that the amount of the added triethylaluminum in the resultant mixture came to be 0.4 mmol, and that the monomer solution at a controlled temperature of 10 to 15°C was gradually added over a period of 10 minutes. As a result, polymerization reaction did not proceed at all, thus failing to afford any copolymer.

**Table 2**

| Comparative Example No. | | 1 | 2 | 3 | 4 |
|---|---|---|---|---|---|
| REACTION CONDITIONS | | | | | |
| St/IB ratio by weight | | 55/45 | 55/45 | 55/45 | 55/45 |
| Main catalyst | | EtAlCl₂ | EtAlCl₂ | TiCl₄ | Et₃Al |
| Co-catalyst | | H₂O | H₂O | H₂O | H₂O |
| Amount of main catalyst added (mmol/g•monomer) | | 0.04 | 0.04 | 0.04 | 0.04 |
| Halogenated metal | | - | - | - | TiCl₄ |
| Halogenated metal/Main | | | | | |
| catalyst molar ratio | | - | - | - | 0.031 |
| Order of adding catalytic components | | H₂O→ EtAlCl₂ | H₂O→ EtAlCl₂ | H₂O→ TiCl₄ | H₂O→ Et₃Al→ TiCl₄ |
| Polymerization temperature | | 10°C | 10/20°C | 10°C | 10°C |
| Dropwise adding time,min | | 12 | 14 | 15 | 10 |
| Post-agitation time,min | | 60 | 60 | 60 | 60 |

| COPOLYMER | | | | | |
|---|---|---|---|---|---|
| St moiety content,wt% | | 55 | 56 | 56 | - |
| GPC-RI | TOP M.W. | 836 | 1476 | 1195 - | |
| Method | Mw | 1630 | 2010 | 1640 | - |
| | Mw/Mn | 1.68 | 1.51 | 1.37 | - |
| GPC-UV | TOP M.W. | 783 | 1425 | 1036 | - |
| Method | Mw | 1320 | 1900 | 1440 | - |
| | Mw/Mn | 1.56 | 1.53 | 1.60 | - |
| Yield, % | | 92 | 95 | 42 | not formed |
| {Remarks} St: styrene, IB: isobutylene Et: ethyl group | | | | | |

When Example 1 is compared with Comparative Example 1, although the polymerization conditions are almost the same between the two except the main catalyst, the copolymer obtained in Example 1 according to the present invention shows a weight-average molecular weight (GPC-RI method) much higher than that obtained in Comparative Example 1 according to a conventional method, thus indicating the difference of 4360 (5990-1630). That is to say, the dialkylaluminum halide according to the present invention is excellent in catalytic activity as compared with alkylaluminum dihalide which is outside the scope of the present invention.

## Claims

1. A catalytic system for copolymerization of isobutylene and styrene which comprises a dialkylaluminum halide and a co-catalyst, said dialkylaluminum halide being represented by the general formula (I )
R¹ R² Al X (I)
wherein R¹ and R² are each an alkyl group having 1 to 10 carbon atoms or an aralkyl group having 7 to 10 carbon atoms, and may be the same as or different from each other, and X is a halogen atom.

2. The catalytic system for copolymerization of isobutylene and styrene according to Claim 1, wherein said dialkylaluminum halide is at least one member selected from the group consisting of dimethylaluminum chloride, diethylaluminum chloride, dipropylaluminum chloride, dibutylaluminum chloride, methylethylaluminum chloride, methylpropylaluminum chloride, methylbutylaluminum chloride, ethylpropylaluminum chloride, ethylbutylaluminum chloride and propylbutylaluminum chloride.

3. The catalytic system for copolymerization of isobutylene and styrene according to Claim 1, wherein the co-catalyst is at least one member selected from the group consisting of water, alcohols, alkyl halides and halogen acids.

4. The copolymerization catalyst for isobutylene and styrene according to Claim 1, wherein the co-catalyst is used in an amount of 0.01 to 30 mols based on one mol of the dialkylaluminum halide.

5. The catalytic system for copolymerization of isobutylene and styrene according to Claim 1, which further comprises a halogenated metal.

6. The catalytic system for copolymerization of isobutylene and styrene according to Claim 5, wherein the halogenated metal is at least one member selected from the group consisting of titanium tetrachloride and tin tetrachloride.

7. The catalytic system for copolymerization of isobutylene and styrene according to Claim 5, wherein the halogenated metal is used in an amount of 0.005 to 0.1 mol based on one mol of the dialkylaluminum halide.

8. The catalytic system for copolymerization of isobutylene and styrene according to Claim 1, wherein the dialkylaluminum halide is diethylaluminum chloride, and the co-catalyst is water.

9. A process for producing an isobutylene/styrene copolymer which comprises a step of copolymerizing isobutylene and styrene at a temperature in the range of 10°C to 50°C in the presence of a catalytic system for copolymerization of isobutylene and styrene, comprising a dialkylaluminum halide and a co-catalyst, said dialkylaluminum halide being represented by the general formula (I)
R¹ R² Al X (I)
wherein R¹ and R² are each an alkyl group having 1 to 10 carbon atoms or an aralkyl group having 7 to 10 carbon atoms, and may be the same as or different from each other, and X is a halogen atom.

10. The process for producing an isobutylene/styrene copolymer according to Claim 9, wherein said dialkylaluminum halide is at least one member selected from the group consisting of dimethylaluminum chloride, diethylaluminum chloride, dipropylaluminum chloride, dibutylaluminum chloride, methylethylaluminum chloride, methylpropylaluminum chloride, methylbutylaluminum chloride, ethylpropylaluminum chloride, ethylbutylaluminum chloride and propylbutylaluminum chloride.

11. The process for producing an isobutylene/styrene copolymer according to Claim 9, wherein the co-catalyst is at least one member selected from the group consisting of water, alcohols, alkyl halides and halogen acids.

12. The process for producing an isobutylene/styrene copolymer according to Claim 9, wherein the co-catalyst is used in an amount of 0.01 to 30 mols based on one mol of the dialkylaluminum halide.

13. The process for producing an isobutylene/styrene copolymer according to Claim 9, wherein the catalytic system further comprises a halogenated metal.

14. The process for producing an isobutylene/styrene copolymer according to Claim 13, wherein the halogenated metal is at least one member selected from the group consisting of titanium tetrachloride and tin tetrachloride.

15. The process for producing an isobutylene/styrene copolymer according to Claim 13, wherein the halogenated metal is used in an amount of 0.005 to 0.1 mol based on one mol of the dialkylaluminum halide.

16. The process for producing an isobutylene/styrene copolymer according to Claim 9, wherein the dialkylaluminum halide is diethylaluminum chloride, and the co-catalyst is water.

17. The process for producing an isobutylene/styrene copolymer according to Claim 9, wherein the copolymer having a weight-average molecular weight in the range of 2,000 to 10,000 is produced by cationic polymerization.

18. A rubber composition comprising a rubber component and a softening agent, wherein the softening agent is an isobutylene /styrene copolymer prepared by using a dialkylaluminum halide.

19. The rubber composition according to Claim 18, wherein the softening agent has a weight-average molecular weight in the range of 2,000 to 10,000.
